# FASCICULE DE BREVET EUROPEEN

(11) **EP 0 614 852 B1**
(45) Date de publication et mention de la délivrance du brevet: **14.01.1998**
(21) Numéro de dépôt: 94400455.5
(22) Date de dépôt: 03.03.1994
(51) Int. Cl.: C01B 33/04, B01J 19/08

(54) **Procédé de préparation du disilane à partir du monosilane par décharge électrique et piégeage cryogénique et réacteur pour sa mise en oeuvre**
Verfahren zur Herstellung von Disilan aus Monosilan durch elektrische Entladung und Benützung einer Kühlfalle, sowie Reaktor zu seiner Durchführung
Process for preparation of disilane from monosilane by electric discharge and use of a cryogenic trap and reactor for carrying out the process

(30) Priorité: 11.03.1993 FR 9302802
(43) Date de publication de la demande: 14.09.1994
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Bernard, Frédéric, 92100 Boulogne-Billancourt (FR); Borg, Valérie, F-38000 Grenoble (FR); Didier, Pierre, F-38000 Grenoble (FR); Guerin, Daniel, Résidence du Val Fleuri, F-77500 Chelles (FR); Gastiger, Michel, F-91400 Orsay (FR); Karinthi, Pierre, F-78350 Jouy en Josas (FR); Villermet, Alain, F-78220 Viroflay (FR); Willemot, Antoine, F-92350 Sceaux (FR)
(74) Mandataire: Le Moenner, Gabriel

(56) Documents cités:
- US-A- 4 568 437
- US-A- 4 792 460
- PATENT ABSTRACTS OF JAPAN vol. 10, no. 287 (C-375)(2343) 30 Septembre 1986 & JP-A-61 106 411 (SEITETSU KAGAKU CO LTD) 24 Mai 1986

## Description

L'invention concerne un procédé de préparation du disilane à partir du monosilane par décharge électrique et piégeage cryogénique.

L'emploi de disilane dans l'industrie de la microélectronique pour réaliser des dépôts de silicium amorphe semi-conducteur présente de très importants avantages : augmentation des vitesses et abaissement de la température de dépôt. Ces avantages aussi considérables qu'ils soient se heurtent au prix excessivement élevé du disilane (10 fois plus important que celui du monosilane).

Le disilane est préparé actuellement avec de faibles rendements par réaction chimique de siliciures métalliques sur des acides inorganiques, ou celle de l'hexachlorosilane sur de l'hydrure d'aluminium et de lithium.

Le disilane disponible sur le marché est non seulement cher mais aussi souvent contaminé par des impuretés telles que des chlorosilanes, des siloxanes et des composés hydrocarbonés.

Selon US-A-4 792 460 on connaît un procédé de fabrication de disilane selon lequel un mélange de monosilane et un gaz inerte est soumis à une décharge électrique. Le procédé est effectué sous pression et température ambiante.

Le document JP-A-61 106411 (Patent Abstracts of Japan, vol. 10 N° 287 (c-375) (2343), 30, Sept. 1986) divulgue également un procédé de production de disilane et trisilane par application d'une décharge électrique à un mélange d'azote et de monosilane, la réaction étant effectuée dans des conditions de vide poussées.

Les polysilanes, ainsi obtenus, sont séparés, on envoyant le mélange produit sur des pièges cryogéniques successifs situés en aval du réacteur.

On connaît aussi par US-A-4 568 437 un procédé de production de disilane à partir de monosilane ayant recours à une décharge électrique luminescente et mis en oeuvre sous une très basse pression. Le rendement en disilane obtenu n'est cependant que moyen (de l'ordre de 40% au maximum) et le fait de devoir travailler sous vide rend difficile l'exploitation d'un tel procédé à l'échelle industrielle.

Il serait donc très utile de disposer d'un procédé de production de disilane qui donne de bons rendements en disilane exempts d'impuretés gênantes et soit économique à mettre en oeuvre.

L'invention vise notamment à fournir un tel procédé.

L'invention concerne un procédé de production de disilane à partir de monosilane, selon lequel on fait passer du monosilane gazeux dans une zone réactionnelle où il est soumis à une décharge électrique engendrée par un courant haute fréquence, caractérisé en ce que
a) le monosilane est utilisé sous forme d'un mélange avec au moins un gaz inerte choisi dans le groupe formé par l'hélium et l'argon,
b) la pression du mélange gazeux dans la zone réactionnelle est comprise entre 0,1 et 3 bars, et
c) on met en contact le mélange gazeux dans la zone réactionnelle sous décharge électrique avec une paroi refroidie à une température suffisamment basse pour que la pression de vapeur saturante du disilane soit négligeable mais pas assez basse pour que le monosilane soit condensable à la pression partielle de travail.

Le procédé de l'invention est basé sur l'utilisation conjointe d'une décharge électrique formatrice de plasma et d'un piège cryogénique situé dans la zone réactionnelle même.

La décharge électrique, qui est du type dit silencieux ou en effet de couronne, agit sur les molécules de monosilane pour créer des ions , des radicaux et des molécules excitées, et ces espèces réagissent entre elles pour former d'abord du disilane, lequel peut ensuite être converti en trisilane, puis en polysilanes et enfin en particules de silicium amorphe hydrogéné. Selon l'invention, on prévoit un piège cryogénique situé dans la zone réactionnelle même pour piéger le disilane au fur et à mesure de sa formation et avant qu'il ne soit lui-même converti à un degré notable en espèces supérieures.

La pression absolue du mélange gazeux peut aller de 0,1 à 3 bars, de préférence de 1 à 1,3 bar. En dessous de 0,1 bar et au-dessus de 3 bars, l'appareillage nécessaire devient trop onéreux. Egalement au-dessus de 3 bars la proportion de monosilane dans le mélange gazeux est limitée à de basses teneurs sous peine que la tension requise pour l'amorçage de la décharge devienne trop élevée et provoque des claquages.

La composition du mélange gazeux dépend largement de la pression opératoire. En effet, on a trouvé que la pression partielle du monosilane de départ doit se situer entre 0,01 et 0,1 bar, de préférence entre 0,04 et 0,08 bar, une pression partielle de moins de 0,01 bar donnant une faible productivité en disilane désiré et, du fait que la tension d'amorçage de la décharge électrique est une fonction croissante de la pression partielle de silane dans la zone réactionnelle, une pression partielle de monosilane de plus de 0,1 bar nécessitant une tension d'amorçage élevée de la décharge électrique qui peut provoquer des claquages dommageables au matériel.

Si donc, on opère à une pression voisine de la pression minimale possible (0,1 bar), le mélange gazeux peut être constitué d'une proportion fortement majoritaire de monosilane. Dans le cas préféré où on opère à la pression atmosphérique ou à une pression légèrement supérieure, le mélange gazeux contient avantageusement 1 à 10%, de préférence 4 à 8%, en volume de SiH₄ et 90 à 99%, de préférence 92 à 96%, en volume dudit gaz inerte.

Il est à noter que le mélange gazeux peut inclure, outre le monosilane et le gaz inerte, une petite quantité (moins de 10% en volume par exemple) d'hydrogène, sans que cela soit préjudiciable au procédé.

La fréquence du courant électrique semble influer le rendement en disilane bien que les raisons n'en soient pas élucidées. On a constaté par exemple qu'avec l'installation dont on disposait et qui est décrite ci-dessous, une fréquence de 3kHz améliorait fortement le rendement en disilane par rapport à une fréquence de 50 kHz. Une fréquence de 1 à 10 kHz, en particulier de 2 à 5 kHz, paraît donc recommandable en l'état actuel de nos connaissances.

Le temps de séjour du mélange gazeux dans la zone réactionnelle est avantageusement bref, par exemple inférieur à 10 secondes, de préférence inférieur à 4 secondes et mieux encore inférieur à 2 secondes.

Par ailleurs, la température de la paroi froide est très importante. Elle doit être suffisamment froide pour que la pression de vapeur saturante du disilane soit négligeable mais insuffisamment froide pour que le monosilane soit condensable à la pression partielle de travail. On a trouvé qu'une température de paroi froide allant de -120°C à -145°C était habituellement satisfaisante aux fins de l'invention.

Il va de soi que les conditions sus-indiquées ne sont qu'indicatives et nullement limitatives.

Des rendements en disilane (nombre de moles de disilane formé par rapport au nombre de moles maximum théorique) supérieurs à 50% et pouvant atteindre des valeurs aussi élevées que 95% et davantage peuvent être obtenus avec le procédé de l'invention.

L'invention concerne aussi un nouveau réacteur utile notamment pour la mise en oeuvre du procédé de l'invention.

Plus précisément, l'invention concerne un réacteur comprenant une chambre réactionnelle, un conduit d'alimentation en continu de cette chambre avec un mélange gazeux, un conduit d'évacuation en continu du gaz résiduel ayant traversé la chambre réactionnelle, et des moyens d'établissement d'une décharge électrique à travers la chambre réactionnelle comprenant une paire d'électrodes et une source de courant électrique haute fréquence, caractérisé en ce que la chambre réactionnelle est délimitée au moins partiellement par une paroi pouvant être refroidie à très basse température.

De préférence, la paroi est refroidie à une température de -120°C ou plus basse.

Selon un mode de réalisation particulier préféré, la chambre réactionnelle est délimitée par deux éléments cylindriques concentriques, l'élément cylindrique intérieur étant réalisé en un matériau diélectrique et étant muni d'une métallisation sur sa surface opposée à l'élément cylindrique extérieur, et l'élément cylindrique extérieur étant réalisé en un métal et pouvant être refroidi extérieurement au moyen d'un serpentin parcouru par un fluide réfrigérant.

Le fait d'utiliser un matériau diélectrique métallisé pour constituer à la fois l'une des parois de la chambre réactionnelle et l'une des électrodes, permet d'obtenir une décharge électrique régulière et d'éviter la formation de points chauds dans le plasma formé.

Avantageusement, l'élément cylindrique extérieur est également équipé d'une résistance chauffante électrique de façon qu'on puisse réguler la température de la paroi refroidie à une température de consigne choisie supérieure à celle que produirait normalement le fluide réfrigérant en faisant alternativement passer du fluide réfrigérant dans le serpentin et en faisant fonctionner la résistance chauffante, selon le besoin.

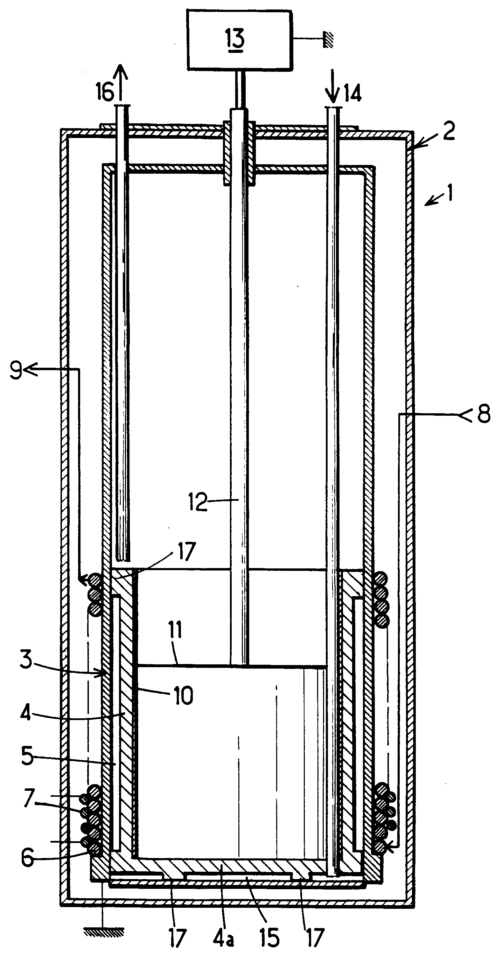

L'invention va être maintenant décrite en se référant au dessin et aux exemples ci-après.

Sur le dessin la figure unique est une vue schématique en coupe d'un réacteur conforme à l'invention.

Ce réacteur, désigné par la référence générale 1, est constitué d'une enceinte close constituée d'une paroi externe 2 et d'une paroi interne 3 espacées, en acier inoxydable, entre lesquelles on a fait le vide dans un but d'isolation thermique. A l'intérieur de la partie inférieure de la paroi interne 3 est disposé un élément cylindrique 4 concentrique délimitant entre eux une chambre réactionnelle 5, cette partie inférieure étant, en outre, équipée sur sa face extérieure d'un serpentin de refroidissement 6 et d'une résistance électrique chauffante 7 enroulée autour de 6. Un conduit d'alimentation 8 en azote liquide et un conduit d'évacuation de l'azote gazeux 9 permettent d'établir un courant d'azote gazeux froid dans le serpentin. L'élément cylindrique 4 intérieur, dont le fond 4a est fermé, est réalisé en un matériau diélectrique, par exemple en alumine ou en verre de borosilicate, et est pourvu sur sa face opposée à la paroi 3 d'une couche de métallisation 10, par exemple une couche argentée, reliée par un contact 11 et un conducteur 12 à une source électrique à haute fréquence 13. De son côté la paroi métallique 3 est reliée à la masse.

Le réacteur comprend également un conduit d'alimentation 14 en mélange gazeux de départ, qui traverse le fond 4a de l'élément 4 et débouche dans un espace 15 ménagé entre le fond 4a de l'élément 4 et le fond de la paroi 3, et un conduit d'évacuation 16 du mélange gazeux résiduel prenant naissance dans la partie de l'enceinte située au-dessus de la chambre 5.

L'élément cylindrique 4 est maintenu espacé de la paroi 3 et du fond de l'enceinte par des éléments d'espacement 17 (faisant partie intégrante de l'élément 4) convenablement répartis ; et entre lesquels le flux gazeux peut passer.

A titre indicatif, le réacteur utilisé dans les exemples suivants comportait des éléments cylindriques d'un diamètre de 3 cm environ ménageant entre eux un espace, formant chambre réactionnelle, d'une épaisseur de 1 mm environ. La hauteur de la chambre a varié de 1 à 3 cm par simple échange de l'élément cylindrique 4. L'épaisseur du matériau diélectrique (alumine) constitutif de l'élément 4 était d'environ 1,5 mm.

### EXEMPLES

A l'aide du réacteur qui vient d'être décrit, on a conduit plusieurs synthèses de disilane. Les conditions opératoires et les résultats obtenus sont récapitulés dans le Tableau ci-après.

Le disilane formé se condensait sur la paroi refroidie et restait sur cette paroi sous forme d'une pellicule et/ou tombait au fond du réacteur. A la fin de la période de réaction, les alimentations en mélange gazeux et en fluide réfrigérant ont été arrêtées et le réacteur a été purgé à l'hélium pour éliminer le monosilane résiduel, puis on a recueilli le disilane sous forme d'un mélange gazeux avec de l'hélium et un peu de trisilane qui se dégageait naturellement du réacteur au cours du réchauffement du réacteur. Le mélange gazeux receuilli avait typiquement la composition suivante, en % en volume :
disilane 60%
trisilane 1%
monosilane résiduel 1%
hélium 38%.

En variante, on pourrait munir le réacteur de moyens de récupération du produit formé à l'état liquide, par exemple en prévoyant une vanne de soutirage au fond du réacteur.

Le Tableau qui suit montre bien les rendements élevés en disilane qui peuvent être obtenus avec le procédé de l'invention.

En particulier, bien que l'on ait décrit le réacteur de l'invention en relation avec la synthèse de disilane, il convient de noter que l'utilité de ce réacteur n'est pas limitée à cette application spécifique, mais qu'il pourrait être utilisé pour la synthèse de toute espèce chimique pouvant être produite dans une décharge électrique et qu'il convient de piéger au fur et à mesure de sa formation avant qu'elle ne soit transformée en d'autres espèces.

Egalement, on pourrait faire fonctionner de façon alternée deux réacteurs du genre décrit, l'un de ceux-ci alimentant une application en disilane produit dans une opération de synthèse précédente, tandis que l'autre est en cours de synthèse de disilane, de façon que l'utilisateur dispose d'une source continue de disilane.

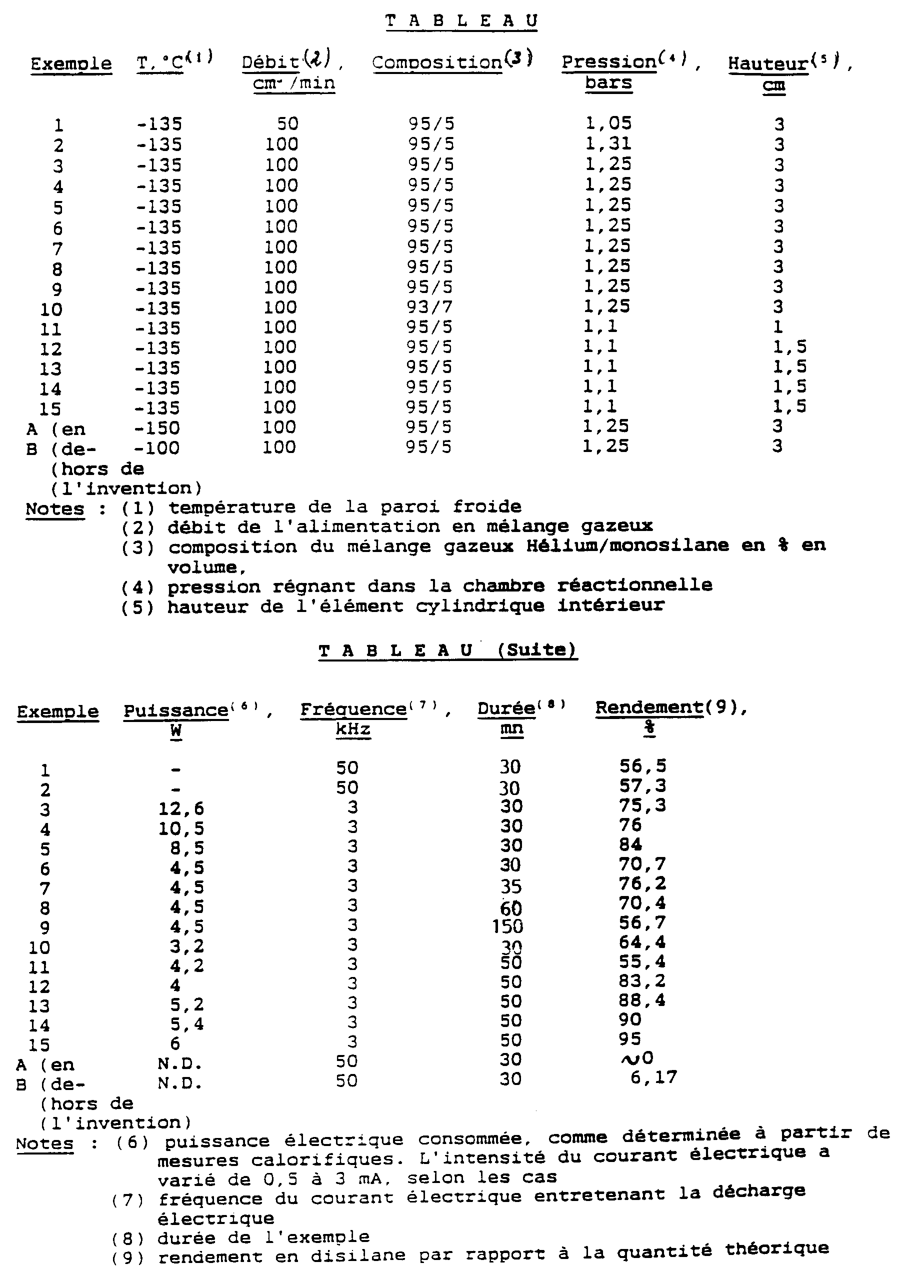

## Revendications

1. Un procédé de production de disilane à partir de monosilane, selon lequel on fait passer du monosilane gazeux dans une zone réactionnelle où il est soumis à une décharge électrique engendrée par un courant haute fréquence, caractérisé en ce que
a) le monosilane est utilisé sous forme d'un mélange avec au moins un gaz inerte choisi dans le groupe formé par l'hélium et l'argon,
b) la pression du mélange gazeux dans la zone réactionnelle est comprise entre 0,1 et 3 bars, et
c) on met en contact le mélange gazeux dans la zone réactionnelle sous décharge électrique avec une paroi refroidie à une température suffisamment basse pour que la pression de vapeur saturante du disilane soit négligeable mais pas assez basse pour que le monosilane soit condensable à la pression partielle de travail.

2. Un procédé selon la revendication 1, caractérisé en ce que la pression est de 1 à 1,3 bar.

3. Un procédé selon la revendication 2, caractérisé en ce que le mélange gazeux contient 1 à 10% en volume de monosilane et 90 à 99% en volume de gaz inerte à basse énergie d'ionisation.

4. Un procédé selon la revendication 3, caractérisé en ce que le mélange gazeux contient 4 à 8% en volume de monosilane et 92 à 96% en volume de gaz inerte.

5. Un procédé selon la revendication 1, caractérisé en ce que la température de la paroi refroidie est de -120°C à -145°C.

6. Un procédé selon la revendication 1, caractérisé en ce que la fréquence du courant engendrant la décharge électrique est de 1 à 10 kHz.

7. Un réacteur comprenant une chambre réactionnelle (5), un conduit (14) d'alimentation en continu de cette chambre avec un mélange gazeux, un conduit (16) d'évacuation en continu du gaz résiduel ayant traversé la chambre réactionnelle, et des moyens d'établissement d'une décharge électrique à travers la chambre réactionnelle comprenant une paire d'électrodes (3, 10) et une source (13) de courant électrique haute fréquence, caractérisé en ce que la chambre réactionnelle est délimitée au moins partiellement par une paroi (3) pouvant être refroidie à très basse température.

8. Un réacteur selon la revendication 7, caractérisé en ce que la paroi peut être refroidie à une température de -120°C ou plus basse.

9. Un réacteur selon la revendication 7, caractérisé en ce que la chambre réactionnelle est délimitée par deux éléments cylindriques concentriques (3, 4), l'élément cylindrique intérieur (4) étant réalisé en un matériau diélectrique et étant muni d'une métallisation (10) sur sa surface opposée à l'élément cylindrique extérieur (3), et l'élément cylindrique extérieur (3) étant réalisé en un métal et étant refroidi extérieurement au moyen d'un fluide réfrigérant.

10. Un réacteur selon la revendication 9, caractérisé en ce que l'élément cylindrique extérieur (3) est également équipé d'une résistance chauffante électrique (7) permettant de réguler la température de la paroi refroidie à une température de consigne désirée.

## Claims

1. A process for producing disilane from monosilane, according to which gaseous monosilane is passed through a reaction zone where it is subjected to an electric discharge produced by a high frequency current, characterized in that
a) monosilane is used in the form of a mixture with at least one inert gas selected from the group formed of helium and argon,
b) the pressure of the gaseous mixture in the reaction zone is between 0.1 and 3 bar, and
c) the gaseous mixture in the reaction zone under an electric discharge is put into contact with a wall cooled to a temperature sufficiently low for the saturated vapour pressure of disilane to be negligible but not so low that monosilane can be condensed at the partial working pressure.

2. A process according to claim 1, characterized in that the pressure is 1 to 1.3 bar.

3. A process according to claim 2, characterized in that the gaseous mixture contains 1 to 10 % by volume of monosilane and 90 to 99 % by volume of inert gas with a low ionization energy.

4. A process according to claim 3, characterized in that the gaseous mixture contains 4 to 8 % by volume of monosilane and 92 to 96 % by volume of inert gas.

5. A process according to claim 1, characterized in that the temperature of the cooled wall is -120°C to -145°C.

6. A process according to claim 1, characterized in that the frequency of the current producing the electric discharge is 1 to 10 kHz.

7. A reactor comprising a reaction chamber (5), a pipe (14) supplying this chamber continuously with a gaseous mixture, a pipe (16) for evacuating continuously the residual gas which has passed through the reaction chamber, and means for producing an electric discharge across the reaction chamber comprising a pair of electrodes (3, 10) and a source (13) of high frequency electric current, characterized in that the reaction chamber is at least partially bounded by a wall (3) which can be cooled to a very low temperature.

8. A reactor according to claim 7, characterized in that the wall may be cooled to a temperature of -120°C or below.

9. A reactor according to claim 7, characterized in that the reaction chamber is bounded by two concentric cylindrical elements (3, 4), the inner cylindrical element (4) being made of a dielectric material and being provided with metallization (10) on its surface opposite the outer cylindrical element (3), and the outer cylindrical element (3) being made of a metal and being cooled externally by means of a cooling fluid.

10. A reactor according to claim 9, characterized in that the outer cylindrical element (3) is also equipped with an electrical resistance heater (7) enabling the temperature of the cooled wall to be adjusted to a desired set value.

## Patentansprüche

1. Verfahren zur Herstellung von Disilan aus Monosilan, gemäß welchem gasförmiges Monosilan einer Reaktionszone zugeführt wird, wo es einer mittels eines Hochfrequenzstoms erzeugten elektrischen Entladung unterworfen wird, dadurch gekennzeichnet, daß
a) das Monosilan in Form eines Gemisches mit wenigstens einem inerten Gas, ausgewählt aus der aus Helium und Argon gebildeten Gruppe, angewendet wird,
b) der Druck des Gasgemisches in der Reaktionszone zwischen 0,1 und 3 bar liegt und
c) das Gasgemisch in der Reaktionszone unter elektrischer Entladung mit einer Wand in Kontakt gebracht wird, die auf eine Temperatur gekühlt ist, die so ausreichend niedrig ist, daß der Sättigungsdampfdruck des Disilans vernachlässigbar ist, aber nicht so ausreichend niedrig ist, daß das Monosilan beim Arbeits-Partialdruck kondensierbar ist.

2. Verfahren nach Anspruch 1, dadurch gekennzeichnet, daß der Druck 1 bis 1,3 bar ist.

3. Verfahren nach Anspruch 2, dadurch gekennzeichnet, daß das Gasgemisch 1 bis 10 Vol.-% Monosilan und 90 bis 99 Vol.-% inertes Gas bei niedriger Ionisations-Energie enthält.

4. Verfahren nach Anspruch 3, dadurch gekennzeichnet, daß das Gasgemisch 4 bis 8 Vol.-% Monosilan und 92 bis 96 Vol.-% inertes Gas enthält.

5. Verfahren nach Anspruch 1, dadurch gekennzeichnet, daß die Temperatur der gekühlten Wand -120°C bis -145°C ist.

6. Verfahren nach Anspruch 1, dadurch gekennzeichnet, daß die Stromfrequenz, welche die elektrische Entladung erzeugt, 1 bis 10 kHz ist.

7. Reaktor, welcher eine Reaktionskammer (5), eine Leitung (14) zur kontinuierlichen Versorgung dieser Kammer mit einem Gasgemisch, eine Leitung (16) zur kontinuierlichen Entsorgung des Restgases, das die Reaktionskammer durchströmt hat, und Mittel zur Erzeugung einer elektrischen Entladung quer durch die Reaktionskammer umfaßt, die ein Elektrodenpaar (3, 10) und eine Quelle (13) für elektrischen Hochfrequenzstrom umfassen, dadurch gekennzeichnet, daß die Reaktionskammer wenigstens teilweise durch eine Wand (3) begrenzt ist, die auf sehr niedrige Temperatur gekühlt werden kann.

8. Reaktor nach Anspruch 7, dadurch gekennzeichnet, daß die Wand auf eine Temperatur von -120°C oder niedriger gekühlt werden kann.

9. Reaktor nach Anspruch 7, dadurch gekennzeichnet, daß die Reaktionskammer durch zwei konzentrische zylindrische Elemente (3,4) begrenzt ist, wobei das innere zylindrische Element (4) aus einem dielektrischen Material hergestellt und mit einem Metallauftrag (10) auf seiner Oberfläche, die dem äußeren zylindrischen Element (3) abgewandt ist, versehen ist und das äußere zylindrische Element (3) aus einem Metall hergestellt ist und äußerlich mittels eines Kühlmediums gekühlt wird.

10. Reaktor nach Anspruch 9, dadurch gekennzeichnet, daß das äußere zylindrische Element (3) auch mit einem elektrischen Heizwiderstand (7) ausgerüstet ist, der es gestattet, die Temperatur der gekühlten Wand auf eine gewünschte Solltemperatur einzustellen.
